# EUROPEAN PATENT APPLICATION

(11) **EP 4 844 452 A1**
(43) Date of publication of application: **25.11.2026**
(21) Application number: 26179584.3
(22) Date of filing: 19.05.2026
(51) Int. Cl.: G01V 1/38

(54) **FAULT RESISTANT TOW AND OPERATION OF MARINE SEISMIC AIR GUN SOURCES**

(30) Priority: 22.05.2025 US 202563810559 P; 04.05.2026 US 202619666610
(71) Applicant: PGS Geophysical AS, 0216 Oslo (NO)
(72) Inventor: VATN, Arne, 0216 Oslo (NO); NIELSEN, Einar, 0216 Oslo (NO)
(74) Representative: Zacco Norway AS

(57) **Abstract**

A fault resistant technique for the tow and operation of air gun sources during a marine seismic survey includes towing, with a towing vessel, a first air gun source in a body of water in a manner such that the first air gun source is directly coupled to the towing vessel by one and only one cable; wirelessly sending, with equipment onboard the towing vessel, a source activation signal to the first air gun source to produce an activation of the first air gun source; and wirelessly receiving, with the equipment onboard the towing vessel, telemetry data from the first air gun source. The one and only one cable includes an air hose and at least one strength member but does not include wires or optical fibers that are configured to transmit control signals or telemetry data between the first air gun source and the towing vessel or vice versa.

## Description

### Cross-Reference to Related Applications

This application claims benefit to the filing date of US Provisional Application 63/810,559, filed May 22, 2025 (the "Provisional Application"), the contents of which are hereby incorporated by reference as if entirely set forth herein. In the event of a conflict between the meaning of terms used in the Provisional Application and the same or similar terms as used herein, the meanings associated with this application shall control.

### Background

Marine seismic surveys are performed in bodies of water to gain information about geological features disposed in the subsurface beneath the water bottom. Some marine seismic surveys seek to identify locations of hydrocarbon reservoirs or to determine changes in properties of such reservoirs. These types of surveys are sometimes referred to as "prospecting surveys." Other surveys seek to assess the suitability of a site for the installation of structures such as wind turbines, pipelines, or cables, or to locate or inspect existing installations of such structures. The latter types of surveys are sometimes referred to as "site surveys." Both prospecting surveys and site surveys typically employ one or more seismic sources that are controlled by a seismic source controller located onboard a survey vessel. Such sources may include one or more impulsive sources (e.g., air guns), one or more non-impulsive sources (e.g., marine vibrators), or a combination of impulsive and non-impulsive sources.

During either type of survey, a source vessel typically uses source umbilical cables to tow one or more sources as the vessel follows designated sailing paths. As the vessel does so, the source controller onboard the vessel activates the sources to produce acoustic pressure waves in the water. The acoustic pressure waves travel downward through the water and pass through the water bottom into the subsurface beneath it, where structures and material interfaces in the subsurface cause some of the acoustic energy to be reflected and/or refracted back upward again. Geophysical sensors disposed in the vicinity of the survey are used to record signals that represent the reflected or refracted energy, and the recorded signals may then be used to produce an image of structures and interfaces in the subsurface.

In marine seismic surveys that employ air gun sources, the source towing and operating techniques of the prior art have resulted in frequent failures in the source umbilical cables. These failures, in turn, have necessitated frequent replacements of faulty source umbilical cables at great expense. A need therefore exists for more fault resistant towing and operating techniques for air gun sources used in marine seismic surveys.

### Brief Description of the Drawings

FIGS. 1 and 2 are top and side views, respectively, illustrating an example towed streamer marine seismic survey in accordance with embodiments.
FIG. 3 is a side view illustrating an example ocean bottom cable marine seismic survey in accordance with embodiments.
FIG. 4 is a side view illustrating an example ocean bottom node marine seismic survey in accordance with embodiments.
FIG. 5-7 are schematic diagrams illustrating example configurations of geophysical sensors and sensor groups suitable for use in marine seismic surveys in accordance with embodiments.
FIG. 8 is a schematic diagram illustrating an example computing device suitable for use in accordance with embodiments.
FIG. 9 is a cutaway view illustrating a first prior art air gun source umbilical cable.
FIG. 10 is a cutaway view illustrating a second prior art air gun source umbilical cable.
FIG. 11 is a cutaway view illustrating a third prior art air gun source umbilical cable.
FIG. 12 is a top view schematically illustrating an example marine seismic survey system in which a towing vessel with an on-vessel control system tows one or more air gun sources according to embodiments.
FIG. 13 is a block diagram schematically illustrating one of the air gun sources of FIG. 12.
FIG. 14 is a side view schematically illustrating the air gun source of FIG. 13 in more detail.
FIG. 15 is block diagram schematically illustrating the on-vessel control system of FIG. 12 in more detail.
FIG. 16 is a cutaway view illustrating a first example air gun source umbilical cable in accordance with embodiments.
FIG. 17 is a cutaway view illustrating a second example air gun source umbilical cable in accordance with embodiments.
FIG. 18 is a cutaway view illustrating a third example air gun source umbilical cable in accordance with embodiments.
FIG. 19 is a cutaway view illustrating a fourth example air gun source umbilical cable in accordance with embodiments.
FIG. 20 is a top view illustrating example marine seismic survey systems utilizing the components of one or more of FIGS. 12-19 in accordance with embodiments.

### Detailed Description

This disclosure describes multiple embodiments by way of example and illustration. It is intended that characteristics and features of all described embodiments may be combined in any manner consistent with the teachings, suggestions and objectives contained herein. For example, elements of a first described embodiment may be substituted for or combined with elements of any one or more other described embodiment to yield additional embodiments. Thus, phrases such as "in an embodiment," "in one embodiment," and the like, when used to describe embodiments in a particular context, are not intended to limit the described characteristics or features only to the embodiments appearing in that context.

The phrases "based on" or "based at least in part on" refer to one or more inputs that can be used directly or indirectly in making some determination or in performing some computation. Use of those phrases herein is not intended to foreclose using additional or other inputs in making the described determination or in performing the described computation. Rather, determinations or computations so described may be based either solely on the referenced inputs or on those inputs as well as others.

The phrase "configured to" as used herein means that the referenced item, when operated, can perform the described function. In this sense an item can be "configured to" perform a function even when the item is not operating and is therefore not currently performing the function. Use of the phrase "configured to" herein does not necessarily mean that the described item has been modified in some way relative to a previous state.

"Coupled" as used herein refers to a connection between items. Except where the context clearly indicated otherwise, such a connection can be direct or can be indirect through connections with other intermediate items.

Terms used herein such as "including," "comprising," and their variants, mean "including but not limited to."

Articles of speech such as "a," "an," and "the" as used herein are intended to serve as singular as well as plural references except where the context clearly indicates otherwise. For example, articles of speech such as "a," "an," and "the," when used in a claim or sentence subsequent to words such as "including," "comprising," or their variants, mean "one or more."

Terms used herein such as "substantially," "about," "approximately," and their variants, mean within plus or minus five percent of the associated reference quantity, item, or characteristic.

### Marine Seismic Surveys Generally

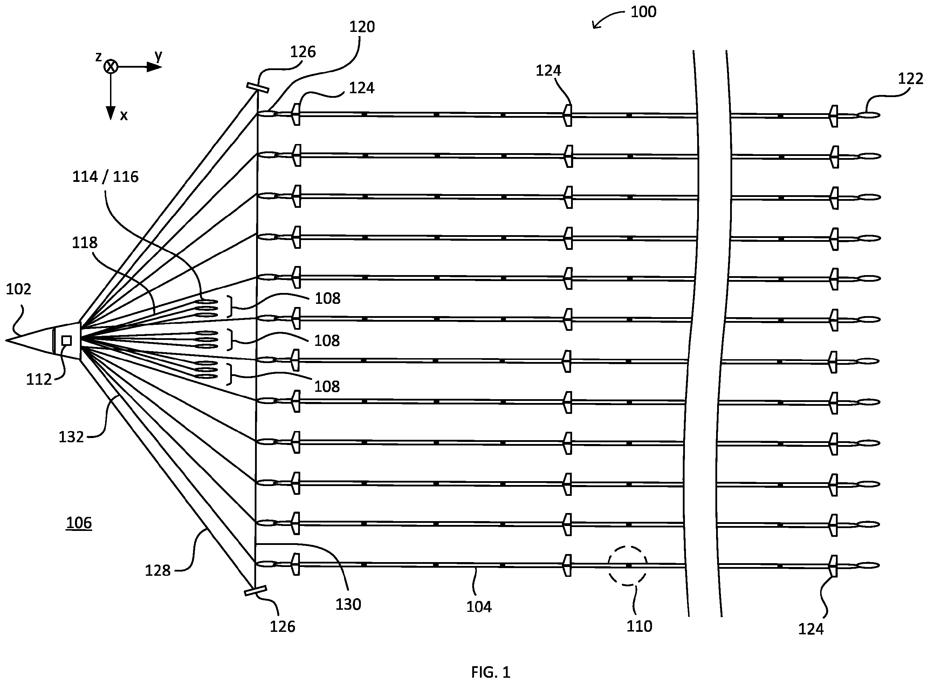

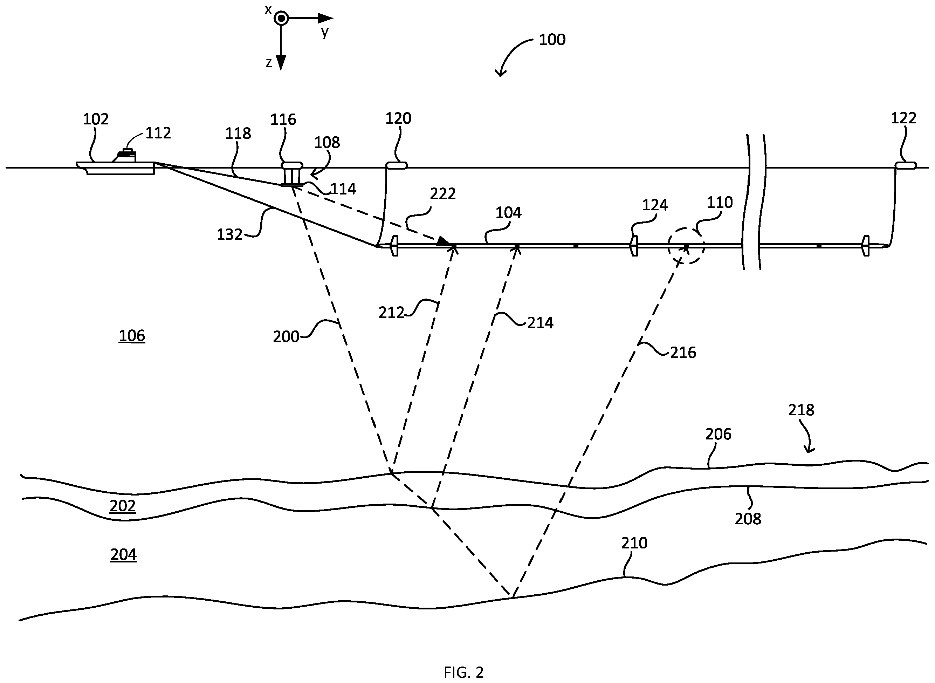

FIGS. 1 and 2 present top and side views, respectively, of an example towed streamer marine seismic survey system that employs impulsive seismic sources. Survey system 100 is representative of a variety of similar geophysical survey systems in which a vessel 102 tows an array of elongate sensor streamers 104 in a body of water 106 such as an ocean, a sea, a bay, or a large lake. Typically the vessel is equipped with at least one global positioning system ("GPS") unit so that its location during the survey may be known and recorded for later use. Vessel 102 is shown towing twelve streamers 104 in the illustrated example. In towed streamer embodiments, any number of streamers may be towed, from as few as one streamer to as many as twenty or more. The terms "streamer" and "cable" as used herein should be interpreted to include any type of seismic sensor cable, and the two terms may be used interchangeably below.

During a typical marine seismic survey, one or more seismic sources 108 are activated to produce acoustic energy 200 that propagates in body of water 106. Energy 200 penetrates various layers of sediment and rock 202, 204 underlying body of water 106. As it does so, it encounters interfaces 206, 208, 210 between materials having different physical characteristics, including different acoustic impedances. At each such interface, a portion of energy 200 is reflected upward while another portion of the energy is refracted downward and continues toward the next lower interface, as shown. Reflected energy 212, 214, 216 is detected by sensors 110 disposed at intervals along the lengths of streamers 104, along with a so-called direct wavefield that reaches the sensors via a path, such as path 222, that travels directly from the impulsive sources 108 to the location of the sensors. In FIGS. 1 and 2, sensors 110 are indicated as black squares inside each of streamers 104. Sensors 110 produce signals corresponding to the reflected energy. These signals are collected and recorded by control equipment 112 located onboard vessel 102. The recorded signals may be processed and analyzed onboard vessel 102 and/or at one or more onshore data centers to produce images of structures within subsurface 218. These images can be useful, for example, in identifying possible locations of hydrocarbon reservoirs within subsurface 218 or in identifying favorable locations within subsurface 218 for the installation of new structures such as foundations for wind turbines.

Any number of sources 108 may be used in a marine seismic survey in accordance with embodiments. In the illustrated example, vessel 102 is shown towing three such sources. In other systems, different numbers of sources may be used, and the sources may be towed by other vessels, which vessels may or may not tow additional streamer arrays. Typically, an impulsive source 108 includes one or more source subarrays 114, and each subarray 114 includes one or more acoustic emitters such as air guns. Thus, a single "air gun source" as used herein may include one or more subarrays of air guns. In such a single air gun source, typically all air gun subarrays contained within the source are activated simultaneously, responsive to a single source activation signal. Depending on the survey type, other types of sources may also be present, such as sparkers, boomers, or marine vibrators. In either case, each subarray 114 may be suspended at a desired depth from a subarray float 116.

In some cases, subarrays 114 may be equipped with steering devices to better control their positions during the survey.

In marine seismic surveys according to the prior art, compressed air as well as electrical power and control signals are communicated to each subarray via source umbilical cables 118, and telemetry data is collected via wires or optical fibers in source umbilical cables 118 from various sensors such as geophysical sensors or GPS units located on subarrays 114 and/or on floats 116.

In the context of surveys related to the prospection of hydrocarbon reservoirs, streamers 104 are often very long -- on the order of 5 to 10 kilometers or longer -- so usually are constructed by coupling numerous shorter streamer sections together. For site surveys such as those related to the installation of wind turbines, the streamers are typically much shorter - on the order of 100 to 500 meters, depending on the water depth.

In either case, each streamer 104 may be attached to a dilt float 120 at its proximal end (the end nearest vessel 102) and to a tail buoy 122 at its distal end (the end farthest from vessel 102). Dilt floats 120 and tail buoys 122 may be equipped with GPS units as well, to help determine the positions of each streamer 104 relative to an absolute frame of reference such as the earth. Each streamer 104 may in turn be equipped with acoustic transceivers and/or compass units to help determine their positions between GPS units and/or relative to one another.

In many survey systems 100, streamers 104 include steering devices 124 attached at intervals, such as every 300 meters. Steering devices 124 typically provide one or more control surfaces to enable moving the streamer to a desired depth, or to a desired lateral position, or both. Paravanes 126 are shown coupled to vessel 102 via tow ropes 128. As the vessel tows the equipment, paravanes 126 provide opposing lateral forces that straighten a spreader rope 130, to which each of streamers 104 is attached at its proximal end. Spreader rope 130 helps to establish a desired crossline spacing between the proximal ends of the streamers. Power, control, and data communication pathways are housed within lead-in cables 132, which couple the sensors and control devices in each of streamers 104 to the control equipment 112 onboard vessel 102.

Collectively, the array of streamers 104 forms a sensor surface at which acoustic energy is received for recording by control equipment 112. In many instances, it is desirable for the streamers to be maintained in a straight and parallel configuration to provide a sensor surface that is generally flat, horizontal, and uniform. In other instances, an inclined and/or fan shaped receiving surface may be desired and may be implemented using control devices on the streamers such as those just described. Other array geometries may be implemented as well. Prevailing conditions in body of water 106 may cause the depths and lateral positions of streamers 104 to vary at times. In various embodiments, streamers 104 need not all have the same length and need not all be towed at the same depth or with the same depth profile.

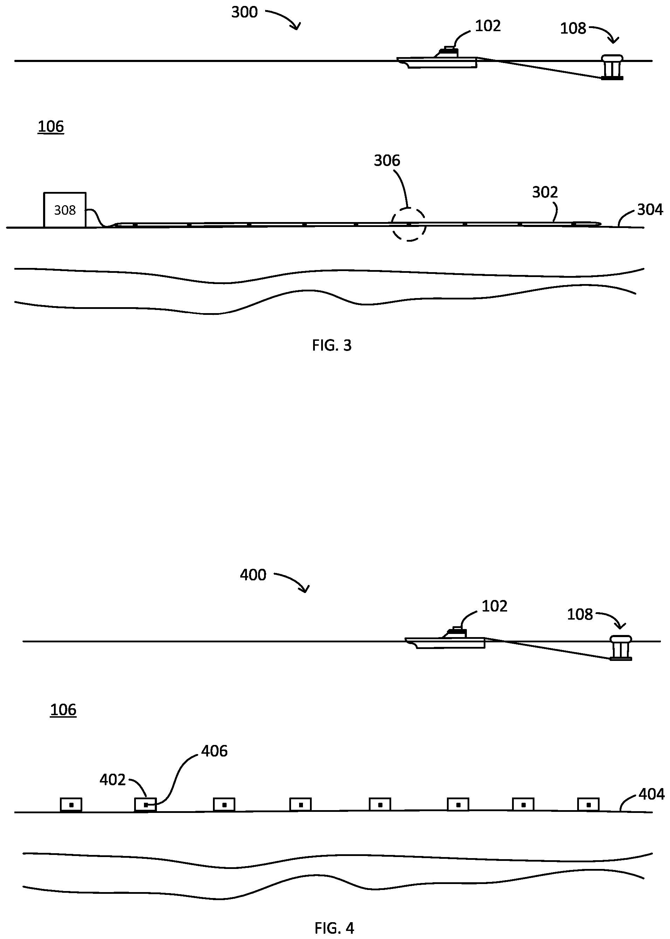

FIG. 3 illustrates an example ocean bottom cable survey system 300, in which a vessel 102 tows one or more sources 108 over an installation of one or more ocean bottom cables 302, each of which is disposed on a water bottom 304. Each cable 302 may include one or more sensors or sensor groups 306 disposed along its length, generally as shown. In turn, each of the cables may be coupled to a manifold 308 in which signals from the sensors may be aggregated and either stored or transmitted to a collection point, or both. In some surveys, the cables may be suspended within the water column.

FIG. 4 illustrates an example ocean bottom node survey system 400, in which a vessel 102 tows one or more sources 108 over an installation of one or more ocean bottom nodes 402, each of which is disposed on a water bottom 404. Each node 402 may include one or more sensors or sensor groups 406 as shown. Signals generated by the sensors or sensor groups may be collected in the nodes for later retrieval, or may be transmitted to a collection point, or both. In some surveys, the nodes may float on or below the water surface.

Techniques to be described herein may be employed in the context of any of the above or other types of marine seismic surveys, as well as in other types of underwater applications.

### Geophysical Sensors in Marine Seismic Surveys

Each of sensors 110, 306, 406 may include one or more different sensor types such as pressure sensors (e.g., hydrophones) and/or motion sensors. Examples of motion sensors include velocity sensors (e.g., geophones) and acceleration sensors (e.g., accelerometers) such as micro-electromechanical system ("MEMS") devices. In general, pressure sensors provide a magnitude-only, or scalar, measurement. This is because pressure in seismic applications is generally not associated with a direction and therefore is regarded as a scalar quantity. Motion sensors such as velocity sensors and acceleration sensors, however, each provide a vector measurement that includes both a magnitude and, at least implicitly, a direction, as velocity and acceleration are both vector quantities. Velocity sensors and acceleration sensors each may be referred to herein as "motion sensors."

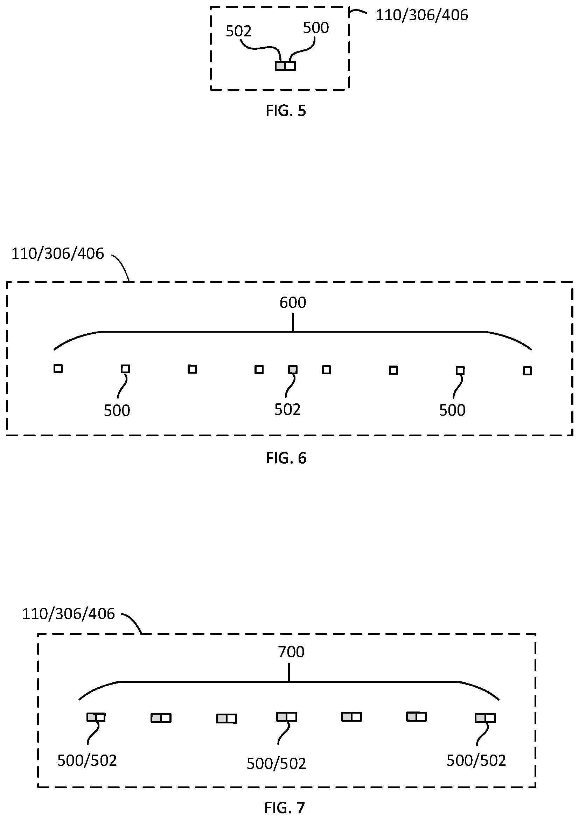

FIGS. 5-7 schematically illustrate example groupings of seismic sensors suitable for use in any of the survey types described above. In these figures, pressure sensors are illustrated with white squares, and pressure sensors are illustrated with grey squares. In the arrangement shown at FIG. 5, each sensor location comprises a single pressure sensor 500 collocated with a single motion sensor 502. In the arrangement shown at FIG. 6, each sensor location comprises a set of pressure sensors 500 forming a single pressure sensor group 600. A motion sensor 502 is disposed substantially at the center of pressure sensor group 600. (It is also possible to employ a similar arrangement in which a single pressure sensor is disposed among a group of motion sensors.) Typically, the signals generated by sensors forming a sensor group are combined or aggregated in some way, such as by summation and/or averaging. Such combination or aggregation may be accomplished in any suitable manner, such as in an analog domain using appropriate electrical coupling, or in a digital domain using digital data processing. In general, a sensor group may include any number of sensors and may comprise either pressure sensors or motion sensors. Normally, however, only measurements of the same type in a group (e.g., pressure, velocity, or acceleration) would be subject to combination or aggregation. Thus, in the particular arrangement illustrated in FIG. 6, the measurements of pressure sensors 500 may be combined or aggregated into a single signal, while the measurements of motion sensor 502 would be preserved as a separate signal. In the arrangement shown at FIG. 7, each sensor location comprises a group 700 of collocated pressure sensors 500 and motion sensors 502. In the latter arrangement, one aggregated signal can be generated from the pressure sensors in the group, while another aggregated signal can be generated from the motion sensors in the group. Various other permutations of the arrangements of FIGS. 5, 6 and 7 are also possible. For example, any of these arrangements may comprise pressure sensors only or motion sensors only.

### Example Computer System

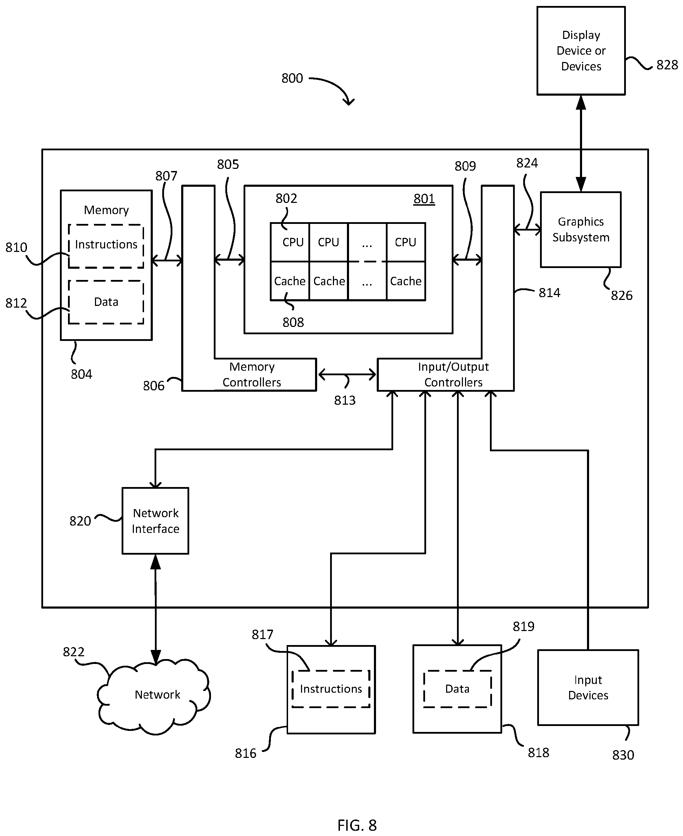

Various types of computing devices may be used in conjunction with embodiments. FIG. 8 is a block diagram logically illustrating a representative example of such a computer system 800 that may be used to perform any of the methods described herein or to implement equipment described herein. For example, a computing device such as computer system 800 may be used to execute survey instructions stored in a non-transitory computer readable medium to control equipment during the performance of a marine seismic survey, to manufacture geophysical data products as described herein, and/or to control the activations of the sources during a survey. Persons having skill in the art and having reference to this disclosure will appreciate that suitable computer system architectures may vary and that alternative or additional types of computing devices may also be employed in conjunction with any of the embodiments described herein. Computer system 800 is therefore shown by way of example and not by way of limitation.

Computer system 800 includes a core/cache complex 801 that contains one or more central processor unit ("CPU") cores 802, each of which is associated with one or more levels of high-speed cache memory 808. The core/cache complex is in turn coupled to one or more high-speed memory controllers 806, as indicated at 805, and to one or more input/output controllers 814, as indicated at 809. The memory controllers and the input/output controllers may additionally be coupled to one another via one or more high-speed interconnects 813.

The memory controllers may be coupled to a system memory 804 by any suitable means, such as via a high-speed memory bus 807. The memory controllers facilitate interactions between the system memory and the core/cache complex as well as between the system memory and the input/output controllers. System memory 804 typically comprises a large array of random-access memory locations, often housed in multiple dynamic random-access memory ("DRAM") devices, which in turn may be housed in one or more dual inline memory module ("DIMM") packages. Each core 802 can execute computer-readable instructions 810 stored in the system memory, and can thereby perform operations on data 812, also stored in the system memory.

The input/output controllers may be coupled to respective subsystems as indicated in the drawing. Non-limiting examples of such subsystems include a graphics subsystem 826, a network interface 820, and one or more non-transitory computer-readable media such as computer-readable medium 816 and computer-readable medium 818.

Network interface 820 may facilitate interactions between components of the computer system and an external network 822. Non-limiting examples of network 822 include a local area network, a wide area network, the Internet, or any combination of these.

Non-limiting examples of non-transitory computer-readable media include so-called solid-state disks ("SSDs"), spinning-media magnetic disks, optical disks, flash drives, magnetic tape, and the like. The storage media may be permanently attached to the computer system or may be removable and portable. In the example shown, medium 816 has instructions 817 (software) stored therein, while medium 818 has data 819 stored therein. Operating system software executing on the computer system may be employed to enable a variety of functions, including transfer of instructions 810, 817 and data 812, 819 back and forth between the storage media and the system memory.

In embodiments that include a graphics subsystem, one or more of the input/output controllers may be coupled to the graphics subsystem by any suitable means, such as by a high-speed bus 824. The graphics subsystem may in turn be coupled to one or more display devices 828. While display devices 828 may be located in physical proximity to the rest of the components of the computer system, they may also be remotely located. Software running on the computer system may generate instructions or data that cause the graphics subsystem to display images, data, and/or user interface elements on display devices 828. Such software may also generate instructions or data that cause the display of such elements on one or more remotely located display devices (for example, display devices attached to a remotely located computer system) by sending the instructions or data over network 822 using an appropriate network protocol. The graphics subsystem may comprise one or more graphics processing units ("GPUs") to accelerate the execution of instructions or to implement any of the methods described herein.

Computer system 800 may represent a single, stand-alone computer workstation that is coupled to input devices 830 such as a keyboard and pointing device. It may also represent one of the nodes in a larger, multi-node or multi-computer system such as a cluster, in which case access to its computing capabilities may be provided by software that interacts with and/or controls the cluster. Nodes in such a cluster may be co-located in a single data center or may be distributed across multiple locations or data centers in distinct geographic regions. Furthermore, computer system 800 may represent an access point from which such a cluster or multi-computer system may be accessed and/or controlled. Any of these or their components or variants may be referred to herein with phrases such as "computing apparatus," a "computing device," or a "computer system."

In example embodiments, data 819 may correspond, for example, to sensor measurements or other data recorded during a marine geophysical survey, or may correspond to survey plan instructions for implementing any of the surveys described herein, or may correspond to data such as de-blended signals that are derived from sensor measurements. Instructions 817 may correspond to instructions for performing any of the methods described herein. In such embodiments, instructions 817, when executed by one or more computing devices such as one or more of CPU cores 802, cause the computing device to perform operations described herein on the data, producing results that may be stored in one or more non-transitory computer-readable media such as medium 818. In such embodiments, medium 818 constitutes a geophysical data product that is manufactured by using the computing device to perform methods described herein and by storing the results in the medium.

Geophysical data product 818 may be stored locally or may be transported to other locations where further processing and analysis of its contents may be performed. If desired, a computer system such as computer system 800 may be employed to transmit the geophysical data product electronically to other locations via a network interface 820 and a network 822 (e.g., the Internet). Upon receipt of the transmission, another geophysical data product may be manufactured at the receiving location by storing contents of the transmission, or processed versions thereof, in another non-transitory computer readable medium. Similarly, geophysical data product 818 may be manufactured by using a local computer system 800 to access one or more remotely-located computing devices in order to execute instructions 817 remotely, and then to store results from the computations on a medium 818 that is attached either to the local computer or to one of the remote computers. The word "medium" as used herein should be construed to include one or more of such media.

### Problems Associated with Prior Art Air Gun Source Towing and Operating Techniques

The technology of air gun source tow and operation in marine seismic surveys has evolved in a way that has resulted in frequent failures of the source umbilical cables. Prior to circa 1980, each air gun source was directly coupled to the towing vessel by multiple separate cables, including an air supply cable, power supply cables, and additional cables used for the transmission of telemetry data and control signals between the towing vessel and the source. Over the several decades that have elapsed since then, source umbilical cables have been developed that incorporate all of these components into various concentric layers of a single cable.

While the latter designs have solved some of the problems that were associated with towing a source with multiple separate cables, these designs have also introduced new problems. A first such problem is that modern source umbilical cables are expensive. At the time of this writing, each such cable typically costs several hundred thousand dollars to procure or replace. A second such problem is that modern source umbilical cables are prone to failure. In particular, the wires and/or fiber optic filaments that are embedded in such cables to transmit power, control signals, and telemetry data between the towing vessel and the source fail frequently due to the tension forces and other stresses that are placed on the cables during their operation and during their deployment and retrieval. Each such failure generally requires replacement of the cable, which significantly increases the costs of performing marine seismic surveys. A third such problem is that modern source umbilical cables have relatively large outside diameters due to the complexity and the multiplicity of their contents. The large diameter of these cables causes even more tension force to develop on the cable as it is towed during a marine seismic survey, which tends to increase the failure rate of the cables even further.

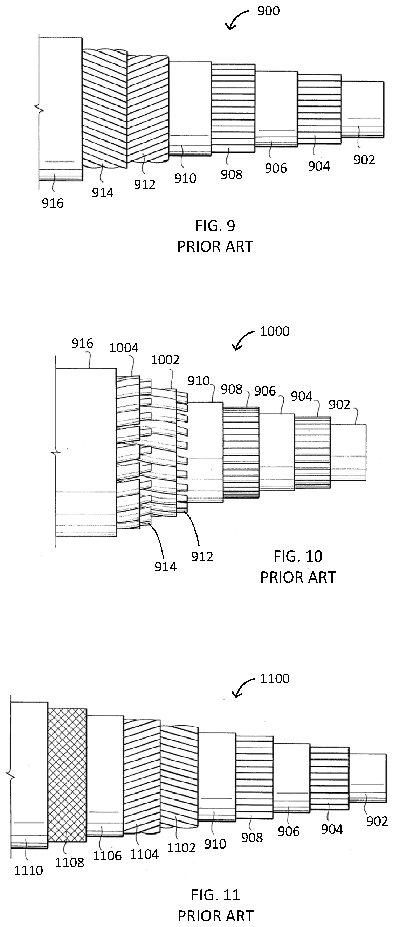

By way of background, US Patent 4,525,813 ("Burrage"), issued in 1985, described source towing and operation technology as it existed prior to circa 1980 this way: "The general method used today to tow air gun sub-arrays and to supply the air and electrical control lines to the air guns is to use a single steel wire rope as the tow line and a bundle of individual air hose lines and electrical cables bundled together to form the umbilical." Burrage at col. 1, lines 57-62. Burrage then introduced several integrated cable embodiments to address the problems associated with towing separate cables bundled together. Three of Burrage's integrated cable embodiments are reproduced herein at FIGS. 9, 10, and 11.

Referring now to FIG. 9, Burrage introduced an armored umbilical 900 comprising a central air hose 902 surrounded by several concentric layers of wires, protective coverings, and strength members. In particular, a first set of control signal wires 904 surrounds the air hose, and a metalized mylar tape wrapping 906 surrounds the control signal wires. A second set of control signal wires 908 surrounds the metalized tape wrapping, and a polyurethane protective coating 910 surrounds the second set of control wires, as shown. Finally, two layers of steel wire strength members 912, 914 surround the polyurethane coating, and a floatation jacket 916 surrounds the entire assembly to add buoyancy to the assembly during tow.

Burrage also described a variation 1000 of cable 900, reproduced herein at FIG. 10, in which the individual steel wires making up the strength members are themselves wrapped in a high density polyethylene plastic material 1002, 1004 for manufacturing reasons and to provide protection of the strength members against saltwater corrosion.

By way of further example, Burrage described another cable embodiment 1100, reproduced herein at FIG. 11, in which the strength members take the form of synthetic fibers or woven braids. In Burrage's cable 1100, steel wire strength members 912, 914 are replaced with layers of KEVLAR rope or braid 1102, 1104, floatation jacket 916 is replaced with a polyurethane protective coating 1106, and an additional strength member 1108 is provided around polyurethane coating layer 1106. The additional strength member consists of a sheath of COPPERWELD steel braid material and is itself surrounded by an outer polyurethane protecting coating 1110.

In the years that followed Burrage, source umbilical cables have only become more complex due to a perceived need to transmit electrical power through separate power wires embedded in the source umbilical cables and to transmit increasing quantities of control signals and telemetry data signals between the towing vessel and the sources via additional wires or optical fibers embedded in the source umbilical cables. Indeed, in modern source umbilical cables, even the optical fibers are in some cases embedded within additional protective metal layers. All of these developments have caused the diameters of the umbilical cables to increase and have caused increased vulnerability to failure, while at the same time increasing the cost of procuring and replacing the cables.

### Fault Resistant Tow and Operation of Marine Seismic Air Gun Sources

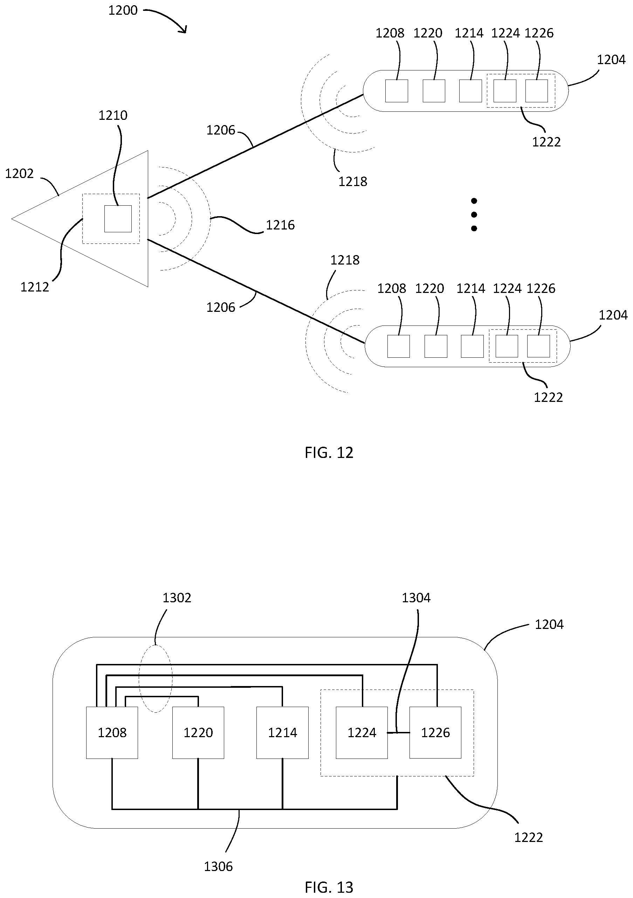

An alternative towing and operating technique for air gun sources will now be described with reference to FIGS. 12-20. In the embodiments to be described below, numerous advantages are gained by making the source umbilical cables simpler than those of the prior art and by operating the air gun sources in a manner that does not rely on wires or optical fibers in the source umbilical cables for the transmission of control signals or telemetry data between the air gun sources and the towing vessel or vice versa.

FIG. 12 is a top view schematically illustrating an example marine seismic survey system 1200 according to embodiments. The components shown in the figure are simplified for ease of explanation and will be described in further detail below. System 1200 includes a towing vessel 1202 and one or more air gun sources 1204. Each of the air gun sources is directly coupled to the towing vessel by one and only one cable 1206. A wireless transceiver 1208 is disposed on or proximate to each of the air gun sources, and a corresponding wireless transceiver 1210 is included among equipment 1212 disposed onboard the towing vessel. Each of cables 1206 is a simplified air gun source umbilical cable. Each such cable includes an air hose and at least one strength member, but does not include wires or optical fibers that are configured to carry control signals from the towing vessel to the air gun source or to carry data signals from the air gun source to the towing vessel. The term "strength member" as used herein does not include wires or optical fibers that are configured to transmit control signals or telemetry data between an air gun source and the towing vessel or vice versa because such wires or optical fibers typically do not possess sufficient tensile strength to act as a strength member for the purpose of towing a marine seismic source.

In some embodiments, air gun source 1204 may include at least one telemetry data generation device 1214. In such embodiments, the telemetry data generation device may be configured to generate telemetry data relating to a status of the air gun source or relating to wavefield emissions generated by the air gun source.

Wireless transceiver 1208 may be configured to receive source activation signals 1216 transmitted wirelessly by equipment 1212 onboard the towing vessel and to wirelessly transmit telemetry data 1218 from the air gun source to equipment 1212.

A controller 1220 may be included on the air gun source in some embodiments to implement source activations responsive to source activation signals 1216 received by wireless transceiver 1208 and/or to route telemetry data from the air gun source to wireless transceiver 1208 for transmission to the vessel.

In some embodiments, a power supply 1222 may be disposed on the air gun source and may be configured to provide electric power to the components associated with the air gun source. In some cases, the power supply may condition the power provided to individual components differently based on the needs of the respective individual components. Such a power supply may include, for example, a battery 1224 and an electric power generation device 1226 configured to generate electric power during the time when the source is deployed in a survey. In some embodiments, the power generation device may comprise a water-driven turbine generator configured to generate electric power as the source is towed through the body of water. In these or other embodiments, the power generation device may comprise a solar panel either in addition to or in lieu of a water-driven turbine generator. Other types of power supplies and/or power generation devices may be used in still other embodiments. In any embodiments, the power generation device may be configured to charge battery 1224.

Survey systems 1200 according to embodiments convey several advantages relative to the survey systems of the prior art, as follows.

First, they are less prone to failure than are the systems of the prior art. The inventors hereof have determined that it is the control and telemetry wires and/or the optical fibers in prior art umbilical cables that tend to fail most easily and most frequently when the cables are placed under tension forces during operation. Accordingly, survey systems 1200 are more resistant to failure because they do not rely on wires or optical fibers in the source umbilical cables to carry control signals from the towing vessel to the air gun source or to carry data signals from the air gun source to the towing vessel. Instead, as was described above, the control signals and data telemetry signals in embodiments are transmitted wirelessly.

Second, they are more cost effective than are the systems of the prior art. Due to the simplicity of the source umbilical cables according to embodiments, the cables are less expensive to procure and to replace than are the more complex source umbilical cables of the prior art.

Third, and as will be further described below, the simplified source umbilical cables according to embodiments may have smaller diameters than the source umbilical cables of the prior art. The narrower diameter of the cables reduces tension forces required to tow them and enables using survey configurations that feature wider crossline spacing between the sources relative to the survey configurations of the prior art and/or that include more sources relative to the survey configurations of the prior art.

### Example Wireless Communications and Air Gun Source and Controller Implementations

Communications between wireless transceivers 1208 on the air gun sources and wireless transceiver 1210 onboard the vessel may be performed in a variety of ways. In some embodiments, transceivers 1208 and 1210 may comprise radio transceivers configured to communicate digital information encoded according to any of a wide variety of known data formats and transmission protocols. FIG. 13 illustrates an implementation of air gun source 1204 by way of non-limiting example in which a local area network 1302, such as an ethernet network, is implemented among the components of the source. In such embodiments, transceiver 1208 may comprises a wireless network bridge or switch, and transceiver 1210 may comprise a corresponding wireless network bridge or switch. In the latter embodiments, transceivers 1210 and 1208 may function to extend a local area network onboard the towing vessel to the local area network 1302 onboard the source. Each component of the air gun source may be assigned a unique IP address and/or MAC address, and data packets in the combined local area network may be routed (for example, using TCP/IP protocol) from any one component to any other component in the network as desired. By way of further non-limiting example, such a wireless network may operate according to the IEEE 802.11 standards over a 5 GHz carrier frequency and may provide data transfer rates of approximately 867 megabits per second. Other network topologies and data communication schemes may be used in other embodiments. In other embodiments, for example, transceivers 1208, 1210 may function as wireless routers, and the local area networks onboard the vessel and the sources may constitute separate subnets coupled together by a wireless wide area network implemented by the transceivers.

Other wireless data communication arrangements are also possible. For example, in embodiments in which the air gun source is coupled to one or more source steering devices, local area network 1302 may be extended to include controllers associated with the steering devices, such that control signals for the steering devices may be transmitted wirelessly from the vessel to the steering devices by means of transceivers 1208, 1210, and telemetry data from the steering devices may be transmitted wirelessly from the steering devices to the vessel in the same manner.

The provision of electric power to the components of the air gun sources may also be accomplished in a variety of ways. For example, as was described above, in some embodiments a power supply 1222 on the air gun source may include a battery 1224 and an electric power generation device 1226 such as a water-driven turbine generator and/or a solar panel configured to generate electric power when the air gun source is deployed in a body of water and thereby to charge the battery via a suitable electrically conductive interconnect 1304. In other embodiments, and as will be described further below, electric power may be transmitted from the towing vessel to the air gun source via two or more electrically isolated metal strength members in source umbilical cable 1206. In any such embodiments, the electric power may be provided to each of the components of the air gun source by one or more conductors 1306 and, in embodiments in which the air gun source is coupled to one or more source steering devices, to the source steering devices as well. In any embodiments, power may be communicated from the power supply to the other components associated with the air gun source by any suitable means, such as by a main power bus or by individual point to point connections.

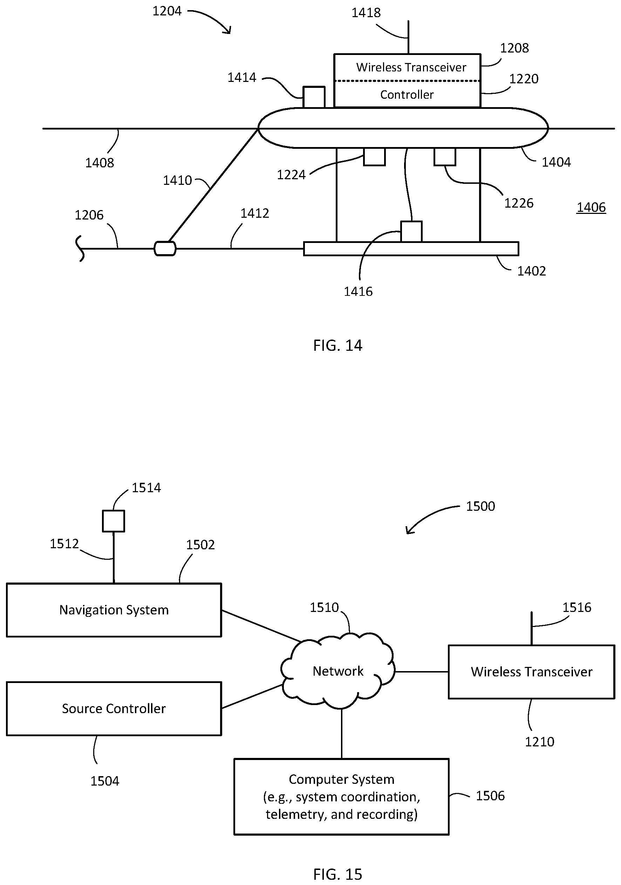

The physical structure of an air gun source according to embodiments may vary from one application or implementation to another. One such implementation is illustrated at FIG. 14 by way of example and not by way of limitation. Referring now to FIG. 14, one or more air guns 1402 may be suspended from one or more floats and/or towing sleds 1404, such as by ropes or chains. Floats or sleds 1404 function to dispose the air guns in a body of water 1406 at a suitable depth below the water surface 1408. A towing bridle 1410 may be provided to facilitate mechanical connection of source 1204 to source umbilical cable 1206 while allowing an air hose 1412 from the umbilical cable to be coupled to the air guns. The latter coupling may be accomplished in a conventional manner except that the additional couplings that are required in prior art air gun sources for accommodating attachments to control and telemetry wires or optical fibers in the umbilical cable may be omitted.

Wireless transceiver 1208 and controller 1220 may be disposed on or proximate to the air gun source, such as by mounting them on float or sled 1404, and may transmit and receive data via any suitable wireless means, such as via an antenna 1418 mounted on or proximate to sled 1404. Activations of air guns 1402 may be accomplished in any suitable manner, such as by coupling the wireless transceiver to source activation circuitry in controller 1220, which in turn may be configured to open one or more solenoids on the source to release compressed air from the air guns responsive to the trigger signal and to close the solenoids for recharging via the air hose contained in source umbilical cable 1206.

As was mentioned above, in some embodiments, one or more telemetry data generation devices may be disposed on or proximate to the air gun source. The telemetry data generation devices may be configured to generate telemetry data relating, for example, to a status of the air gun source and/or to wavefield emissions generated by the air gun source. For instance, in some embodiments, the telemetry data generation devices may include a GPS unit 1414 configured to provide information relating to the current location of the air gun source. In those or other embodiments, the telemetry data generation devices may also include one or more geophysical sensors such as a hydrophone 1416, which may be mounted on or near air guns 1402 to provide sensor data relating to a near field pressure wave emitted by the air gun source. Other telemetry data generation devices may be provided in other embodiments.

In embodiments that include a battery 1224 and an electric power generation device 1226 as described above, the battery and power generation device may be mounted or otherwise coupled to sled 1404. In embodiments where the air gun source derives electric power from strength members in the source umbilical cable, one or both of electric power generation device 1226 and battery 1224 may be omitted, if desired.

The physical characteristics of equipment 1212 onboard the towing vessel may also vary from one application or implementation to another. One such implementation is illustrated at FIG. 15 by way of example and not by way of limitation. Referring now to FIG. 15, a control system 1500 may be disposed onboard the vessel. Control system 1500 may include a navigation system 1502, a source controller 1504, a computer system 1506, and wireless transceiver 1210. The various components of control system 1500 may be interconnected in any suitable manner, such as via a local area network 1510 (for example, an ethernet network) and/or via one or more direct connections, as indicated at 1512.

Navigation system 1502 may be configured to follow a predetermined marine seismic survey plan and to provide real time location information to other components in system 1500 such as the source controller. The location information may be determined, for example, via a GPS unit 1514 disposed onboard the vessel and coupled to the navigation system either directly or indirectly, such as via local area network 1510.

Source controller 1504 may generate source activation signals for the one or more air gun sources towed by the towing vessel during a survey. Each such activation signal may correspond, for example, to a shot point to be executed during the survey and may be generated by the source controller responsive to location information and/or to survey plan information available from other components in control system 1500 such as from the navigation system and the computer system. The source activation signals may be physically transmitted to the air gun sources by wireless transceiver 1210 in any suitable manner, such as via an antenna 1516, and using any suitable communications protocol, as was generally described above.

Wireless transceiver 1508 may also be configured to receive telemetry data from each of the air gun sources and to make the telemetry information available to other components of the control system, such as to computer system 1506.

Computer system 1506 may be configured to coordinate the activities of control system 1500, to receive air gun telemetry data from the wireless transceiver, and to record the telemetry data or data representative thereof in one or more non-transitory computer readable media such as any of those described above. The computer system may also be configured to provide real time information related to the survey in progress including, for example, real time information about the air guns being used in the survey.

### Example Simplified Source Umbilical Cables

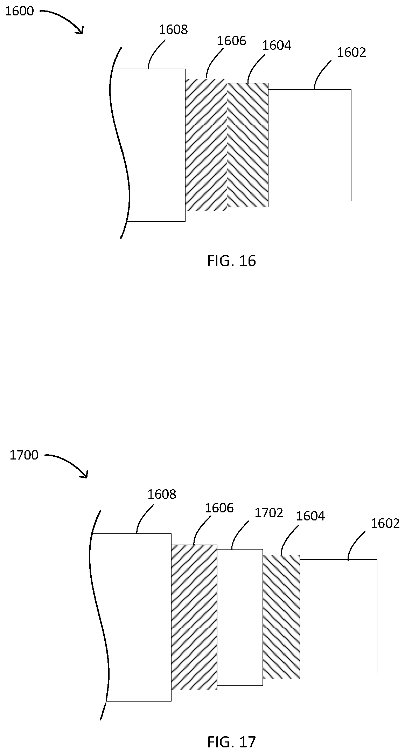

FIGS. 16-19 are cutaway views illustrating, by way of non-limiting example, several simplified source umbilical cables suitable for use according to embodiments.

Referring now to FIG. 16, a first example source umbilical cable 1400 consists of an air hose 1602, a first strength member 1604 disposed concentrically around the air hose, a second strength member 1606 disposed concentrically around the first strength member, and an outer protective coating 1608. In some embodiments, strength members 1604 and 1606 may be constructed with parallel wires or fibers, and the individual wires or fibers in the two strength members may form respective thread patterns that are oriented in opposite directions such that the individual elements in the two strength members are coiled contra-helically, as shown.

Referring now to FIG. 17, a second example source umbilical cable 1700 may be constructed similarly to cable 1600 but with an additional layer 1702 disposed between the two strength members, as shown. Layer 1702 may be constructed of a material that provides one or more functions such as abrasion resistance, buoyancy, and/or electrical insulation between the two strength members. In embodiments in which the additional layer acts as an electrical insulator, and in which strength members 1604 and 1606 are made with an electrically conductive material such as steel wires, the two strength members may be used to provide electrical power from the towing vessel to the air gun source, as was mentioned above.

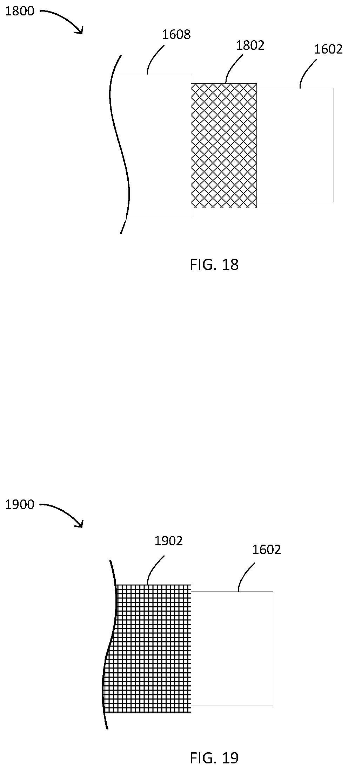

Referring now to FIG. 18, a third example source umbilical cable 1800 may consist of an air hose 1602, a single strength member 1802 disposed concentrically around the air hose, and an outer protective coating 1608.

Referring now to FIG. 19, a fourth example source umbilical cable 1900 may consist of an air hose 1602 and an outer layer 1902 in which a protective coating and a strength member are integrally formed. The structure and composition of the integrally formed protective coating and strength member may vary from one embodiment to another. In some embodiments, for example, a braided, coiled, woven, or mesh material may be encapsulated in a polyurethane or other protective material to form the single outer layer for the cable. Other materials and construction techniques may also be used.

In any source umbilical cables according to embodiments, the strength members and outer coatings may be constructed using any suitable materials, such as any of those described above or others. Moreover, the strength members may take a variety of forms. In some embodiments, for example, any of the strength members may be constructed using metal or synthetic fiber braids, weaves, or meshes, or using coiled wires or synthetic fibers. Furthermore, the strength members within any single cable need not all exhibit the same materials or structure. For example, some of the strength members may be formed from different materials than are other strength members in the same cable, or may have a structure that differs from one or more other strength members in the same cable. Similarly, the outer protective coatings in cables according to embodiments may be made from a variety of materials, including any of those described above or others.

In any embodiments, a simplified source umbilical cable may also include one or more layers or materials that are included in the cable as bedding or filler, or to provide a mechanical barrier between adjacent layers, to provide moisture protection, to provide electrical insulation, or to provide buoyancy to the cable when the cable is deployed in a body of water.

Not only are source umbilical cables according to embodiments simpler than those of the prior art and therefore less prone to failure and less expensive than the source umbilical cables of the prior art, they also can be constructed such that they have a smaller outside diameter relative to the source umbilical cables of the prior art. This reduction in cable diameter, in turn, reduces the tension forces that must be borne by cables according to embodiments during tow relative to the tension forces that would be experienced by a same-length cable according to the prior art. Similarly, cables according to embodiments may be made longer than the cables of the prior art at the same towing tension force, due to the reduced diameter of cables according to embodiments relative to those of the prior art. These features enable survey systems according to embodiments to reliably tow more sources, and to tow the sources with wider crossline separation between them, relative to the survey systems of the prior art.

As a first non-limiting example of the above, in a simplified cable according to embodiments that contains an air hose having an inside diameter of 1 inch (25.4 mm, or about 25 mm), the other members inside the cable may be constructed such that the finished cable outside diameter is no more than about 60 mm. By way of contrast, a prior art source umbilical cable containing the same size air hose would have an outside diameter of at least about 65 mm due to the presence of control, telemetry, and other wires and/or optical fibers disposed in the cable.

As a second non-limiting example, in a simplified cable according to embodiments that contains an air hose having an inside diameter of 1.25 inches (31.75 mm, or about 32 mm), the other members inside the cable may be constructed such that the finished cable outside diameter is no more than about 65 mm. A prior art source umbilical cable containing the same size air hose, on the other hand, would have an outside diameter of at least about 72 mm due to the presence of control, telemetry, and other wires and/or optical fibers disposed in the cable.

By way of further non-limiting example, the simplified air gun source umbilical cables in each of the above two cases may be constructed by using a reinforced air hose material having a total radial thickness of about 5 mm and by surrounding the reinforced air hose with other materials having an aggregate radial thickness of about 12 mm. A reinforced air hose in such embodiments may be constructed, for example, using a nylon-lined thermoplastic central hose with concentric reinforcement layers around it. The reinforcement layers may include, for example, KEVLAR and/or polyurethane jacketing material. In some embodiments, the air hose may be further reinforced by adding a polyester over-braid around the air hose jacketing material, where the over-braid may have a radial thickness of about 1.4 mm. The other layers and materials in such embodiments may include, for example, a layer of bedding, filler, or buoyancy material having a radial thickness of about 2.3 mm, one or more strength member layers having an aggregate radial thickness of about 4.6 mm, and an outer protective layer having a radial thickness of about 3.3 mm. In other embodiments, other structures, materials, and thicknesses may be used to construct a simplified air gun source umbilical cable.

In both of the above example cases, the simplified source umbilical cables according to embodiments achieve finished outside diameter reductions of about 8% or more relative to prior art cables having the same air hose inside diameter.

In further embodiments, a simplified source umbilical cable in accordance with the above may be constructed such that it exhibits a finished outside diameter that is not more than twice the inside diameter of the air hose that it contains. For example, by removing the bedding material layer of the source umbilical cable described in the second example above, the outside diameter of the finished cable can be further reduced to about 60.7 mm, or about 1.9 times the 1.25 inch (31.75 mm, or about 32 mm) inside diameter of the air hose contained in the cable.

Minimum finished outside diameters for simplified source umbilical cables according to embodiments may correspond to the inside diameter of the air hose included in the cable plus the thickness of the hose itself and any additional layers surrounding it in a given embodiment. By way of non-limiting example, a minimum outside diameter for an air gun source umbilical cable that includes a 1 inch (25.4 mm, or about 25 mm) inside diameter air hose may be about 36 mm, whereas a minimum outside diameter for an air gun source umbilical cable that includes a 1.25 inch (31.75 mm, or about 32 mm) inside diameter air hose may be about 42 mm.

While several example simplified source umbilical cables have been described herein by way of example, other types of simplified source umbilical cables according to embodiments beyond those described herein are also possible, as will be appreciated by persons having skill in the art and having reference to this disclosure.

### Example Wide Tow Source Configurations

Both the smaller diameter and the enhanced resistance to failure exhibited by source umbilical cables according to embodiments can be exploited to enable survey configurations in which a single towing vessel is able to tow air gun sources with wider crossline separations between them than is possible according to the techniques of the prior art, and/or to tow more air gun sources than is possible according to the techniques of the prior art.

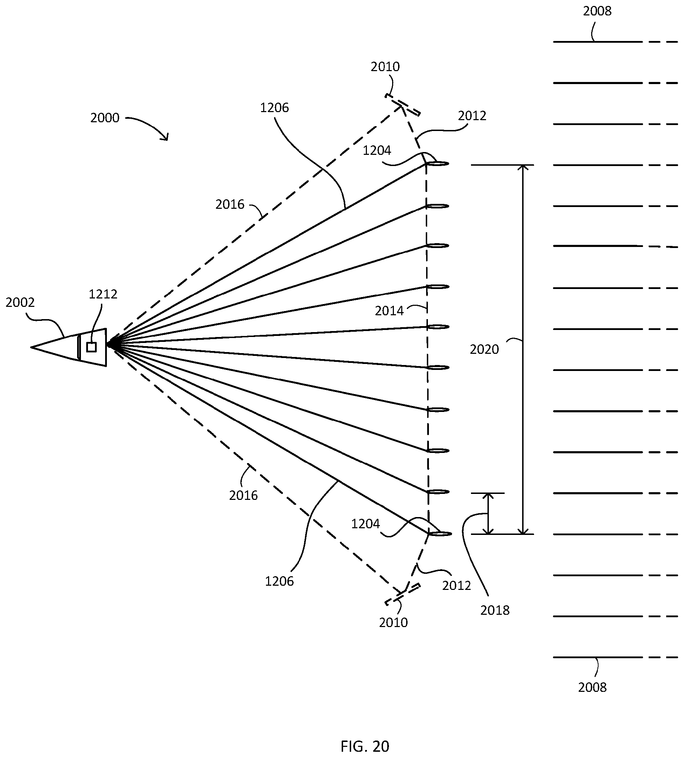

FIG. 20 is a top view schematically illustrating example towing configurations 2000 that employs source umbilical cables and air gun sources according to embodiments. In towing configurations 2000, a towing vessel 2002 tows one or more marine seismic air gun sources 1204 in a body of water. Each of the air gun sources is directly coupled to the towing vessel by exactly one cable - namely, a source umbilical cable 1206 -- and by no other cables or ropes. In some embodiments, the vessel may tow marine seismic sources only. In other embodiments, the vessel may tow marine seismic sources and also one or more streamers 2008 such as those described above with reference to FIGS. 1-7.

Crossline positions of sources 1204 may be established and maintained using a variety of techniques. In some embodiments, the vessel may tow paravanes 2010 that are coupled to the air sources by spur lines 2012 and to one or more spreader ropes 2014. The paravanes themselves may be directly coupled to the vessel by super wide ropes 2016. In other embodiments, one or more source steering devices (not shown) may be coupled to each of air gun sources 1204. For example, a steering device may be coupled directly to the air gun source float or sled, or steering devices may be positioned on either side of an air gun source and coupled to the source either directly or indirectly, such as by means of cables or ropes.

In embodiments that employ source steering devices, control signals for the steering devices may be provided wirelessly by equipment onboard the towing vessel, as was generally described above, such as by sending the control signals from the vessel via transceiver 1210 and by receiving them at the air gun source via transceiver 1208. Also in such embodiments, electric power for the source steering devices may be provided by the air gun source to the steering device. For example, in embodiments that include an electric power generation device 1226 and/or a battery 1224 on the air gun source, the associated power supply unit 1222 may be coupled to the steering device. In embodiments wherein electric power is provided to the air gun source via strength members in the source umbilical cable, power from the source umbilical cable may be coupled from the air gun source to the steering device, such as, for example, by electrically coupling the source umbilical strength members to the steering device or by electrically coupling power supply 1222 to the steering device. Other techniques for coupling electric power from the air gun source to steering devices may also be used.

As was mentioned above, it is desirable for a variety of reasons to tow air gun sources with wide crossline separations between them and to tow many air gun sources. In this regard, prior art air gun source towing configurations appear to have reached a practical limit of 500 meters crossline separation between the crossline widest sources. This is in part due to the large tension forces that are exerted on the prior art source umbilical cables under wide source towing conditions. Specifically, when crossline separation between the sources is large, the source umbilical cables coupled to the wide towed sources must be made longer and necessarily must be oriented in a more crossline direction relative to the source umbilical cables that are coupled to more narrowly towed sources. Both the length of these cables and their crossline orientations increase the tension forces exerted on the cables during tow. In practice, such tension forces can exceed 3.5 tons at a towing speed of 4.5 knots when the sources are towed with a 500 meter crossline separation. This tension force frequently results in failure for prior art source umbilical cables. The towing tension problem and the resulting failures of prior art cables is made worse by the fact that source umbilical cables of 1000 meters or longer are required to tow sources at crossline separations that are wider than 500 meters.

By way of contrast to the prior art, it is a feature of the air gun source towing and operating techniques described herein that sources may be towed with crossline separations of 500 meters or larger while keeping the tension forces experienced by the source umbilical cables at or below 3.5 tons at a vessel speed of 4.5 knots. Moreover, when source umbilical cables according to embodiments are employed, the umbilical cables may have lengths of 1000 meters or longer while still keeping the tension forces on the umbilical cables at or below 3.5 tons at a vessel speed of 4.5 knots.

Furthermore, by using the towing and operating techniques described herein, as many as ten or more air gun sources may be towed by a single vessel with crossline separations of 100 meters or more between each of the sources, such that the crossline widest sources are separated by 900 meters or more. For example, in the embodiment illustrated at FIG. 12, ten air gun source are towed with a crossline separation of 100 meters between adjacent sources (see 2018) such that the crossline separation between the crossline outermost sources is 900 meters (see 2020). In the latter embodiment and others, the source umbilical cables coupled between the towing vessel and the crossline outermost sources may have lengths of 1000 meters or longer. Despite the source umbilical cables having such a long length, and despite the wide crossline separation between the outermost sources, the maximum towing tension on the outer source umbilical cables may be kept within tolerable operational limits - for example, at or below 3.5 tons at a vessel speed of 4.5 knots.

Accordingly, systems according to embodiments may be employed to improve survey efficiency and to reduce both the frequency and the cost of equipment failures per survey.

Multiple specific embodiments have been described above and in the appended claims. Such embodiments have been provided by way of example and illustration. Persons having skill in the art and having reference to this disclosure will perceive various utilitarian combinations, modifications and generalizations of the features and characteristics of the embodiments so described. For example, steps in methods described herein may generally be performed in any order, and some steps may be omitted, while other steps may be added, except where the context clearly indicates otherwise. Similarly, components in structures described herein may be arranged in different positions or locations, and some components may be omitted, while other components may be added, except where the context clearly indicates otherwise. The scope of the disclosure is intended to include all such combinations, modifications, and generalizations as well as their equivalents.

### Examples

1. A marine seismic survey system, comprising:
   a towing vessel;
   a first air gun source directly coupled to the towing vessel by one and only one cable;
   an electric power generation device and a battery coupled to the first air gun source and configured to provide electric power to the air gun source when the air gun source is deployed in a body of water;
   at least one telemetry data generation device disposed on or proximate to the air gun source and configured to generate telemetry data relating to a status of the first air gun source or relating to wavefield emissions generated by the first air gun source; and
   a wireless transceiver disposed on or proximate to the air gun source and configured to receive source activation signals from equipment onboard the towing vessel and to transmit the telemetry data to the equipment onboard the towing vessel;
   wherein the one and only one cable is a first source umbilical cable that comprises an air hose and at least one strength member but does not include wires or optical fibers that are configured to transmit control signals or telemetry data between the first air gun source and the towing vessel or vice versa.
2. The marine seismic survey system of claim 1, wherein:
   the cable has a cable outside diameter;
   the air hose has an air hose inside diameter; and
   the cable outside diameter is no more than twice the air hose inside diameter.
3. The marine seismic survey system of claim 1, wherein:
   the air hose inside diameter is about 1 inch; and
   the cable outside diameter is no more than about 60 mm.
4. The marine seismic survey system of claim 1, wherein:
   the air hose inside diameter is about 1.25 inches; and
   the cable outside diameter is no more than about 65 mm.
5. The marine seismic survey system of claim 1, further comprising:
   a second air gun source configured like the first air gun source; and
   a second source umbilical cable configured like the first source umbilical cable;
   wherein the second air gun source is directly coupled to the towing vessel by the second source umbilical cable only; and
   wherein the first air gun source and the second air gun source are separated in a crossline direction by at least about 500 meters.
6. The marine seismic survey system of claim 5, wherein:
   the first air gun source and the second air gun source are separated in a crossline direction by at least about 900 meters.
7. The marine seismic survey system of claim 6, wherein:
   the first source umbilical cable and the second source umbilical cable are both at least about 1000 meters long.
8. The marine seismic survey system of claim 7, wherein:
   the towing tensions between the towing vessel and the first source umbilical cable and between the towing vessel and the second source umbilical cable are both less than or equal to about 3.5 tons at a towing vessel speed of at least about 4.5 knots.
9. The marine seismic survey system of claim 6, wherein:
   a total of at least 10 air gun sources are directly coupled to the towing vessel, each by a respective source umbilical cable configured like the first source umbilical cable.
10. The marine seismic survey system of claim 1, further comprising:
   at least one source steering device coupled to the first air gun source; and
   wherein electric power for the source steering device is provided by the electric power generation device and the battery.
11. The marine seismic survey system of claim 1, further comprising:
   at least one source steering device coupled to the first air gun source; and
   wherein steering control signals for the source steering device are provided by equipment onboard the towing vessel to the source steering device via the wireless transceiver associated with the air gun source.
12. The marine seismic survey system of claim 1, wherein the first source umbilical cable comprises:
   the air hose;
   a first strength member disposed concentrically around the air hose;
   a second strength member disposed concentrically around the first strength member; and
   an outer protective coating.
13. The marine seismic survey system of claim 12, wherein:
   the first source umbilical cable further comprises an additional layer concentrically disposed between the first strength member and the second strength member.
14. The marine seismic survey system of claim 13, wherein:
   the additional layer comprises a material that provides at least one of: abrasion resistance, buoyancy, or electrical insulation.
15. The marine seismic survey system of claim 1, wherein the first source umbilical cable comprises:
   the air hose;
   a single strength member disposed concentrically around the air hose; and
   an outer protective coating.
16. The marine seismic survey system of claim 15, wherein:
   the single strength member comprises a braided, woven, coiled, or mesh material.
17. The marine seismic survey system of claim 1, wherein the first source umbilical cable comprises:
   the air hose; and
   an outer protective coating and a strength member that are integrally formed.
18. The marine seismic survey system of claim 1, further comprising:
   at least one streamer coupled to the towing vessel.
19. The marine seismic survey system of claim 1, wherein:
   the telemetry data comprises at least one of: information relating to a current location of the first air gun source, and sensor data relating to a near field pressure wave emitted by the first air gun source.
20. The marine seismic survey system of claim 1, wherein:
   the electric power generation device comprises a water-driven turbine generator configured to generate electric power as the first air gun source is towed in the body of water.
21. The marine seismic survey system of claim 1, wherein:
   the electric power generation device comprises a solar panel.
22. A method of manufacturing a geophysical data product, comprising:
   towing, with a towing vessel, a first air gun source in a body of water in a manner such that the first air gun source is directly coupled to the towing vessel by one and only one cable;
   wirelessly sending, with equipment onboard the towing vessel, a source activation signal to the first air gun source to produce an activation of the first air gun source;
   wirelessly receiving, with the equipment onboard the towing vessel, telemetry data from the first air gun source; and
   recording the telemetry data in a non-transitory computer readable medium, thereby completing the manufacture of the geophysical data product;
   wherein the one and only one cable is a first source umbilical cable that comprises an air hose and at least one strength member but does not include wires or optical fibers that are configured to transmit control signals or telemetry data between the first air gun source and the towing vessel or vice versa.
23. The method of claim 22, further comprising:
   towing, with the towing vessel, a second air gun source configured like the first air gun source and directly coupled to the towing vessel by a second source umbilical cable only;
   wherein the second source umbilical cable is configured like the first source umbilical cable; and
   wherein the first air gun source and the second air gun source are separated in a crossline direction by at least 500 meters.
24. The method of claim 23, wherein:
   the first air gun source and the second air gun source are separated in a crossline direction by at least about 900 meters.
25. The method of claim 24, wherein:
   the first source umbilical cable and the second source umbilical cable are both at least about 1000 meters long.
26. The method of claim 24, wherein:
   the towing tensions between the towing vessel and the first source umbilical cable and between the towing vessel and the second source umbilical cable are both less than or equal to about 3.5 tons at a towing vessel speed of at least about 4.5 knots.
27. The method of claim 26, wherein:
   a total of at least 10 air gun sources are directly coupled to the towing vessel, each by a respective source umbilical cable configured like the first source umbilical cable and by no other cables.
28. The method of claim 22, further comprising:
   providing electrical power to the first air gun source via first and second electrically conductive strength members in the first source umbilical cable.

## Claims

1. A marine seismic survey system, comprising:
a towing vessel;
a first air gun source directly coupled to the towing vessel by one and only one cable;
an electric power generation device and a battery coupled to the first air gun source and configured to provide electric power to the air gun source when the air gun source is deployed in a body of water;
at least one telemetry data generation device disposed on or proximate to the air gun source and configured to generate telemetry data relating to a status of the first air gun source or relating to wavefield emissions generated by the first air gun source; and
a wireless transceiver disposed on or proximate to the air gun source and configured to receive source activation signals from equipment onboard the towing vessel and to transmit the telemetry data to the equipment onboard the towing vessel;
wherein the one and only one cable is a first source umbilical cable that comprises an air hose and at least one strength member but does not include wires or optical fibers that are configured to transmit control signals or telemetry data between the first air gun source and the towing vessel or vice versa.

2. The marine seismic survey system of claim 1, wherein:
the cable has a cable outside diameter;
the air hose has an air hose inside diameter; and
the cable outside diameter is no more than twice the air hose inside diameter.

3. The marine seismic survey system of claim 1, wherein:
the cable has a cable outside diameter;
the air hose has an air hose inside diameter;
the air hose inside diameter is about 1 inch; and
the cable outside diameter is no more than about 60 mm.

4. The marine seismic survey system of claim 1, wherein:
the cable has a cable outside diameter;
the air hose has an air hose inside diameter;
the air hose inside diameter is about 1.25 inches; and
the cable outside diameter is no more than about 65 mm.

5. The marine seismic survey system of any of the preceding claims, further comprising:
a second air gun source configured like the first air gun source; and
a second source umbilical cable configured like the first source umbilical cable;
wherein the second air gun source is directly coupled to the towing vessel by the second source umbilical cable only; and
wherein the first air gun source and the second air gun source are separated in a crossline direction by at least about 500 meters.

6. The marine seismic survey system of claim 5, wherein:
the first air gun source and the second air gun source are separated in a crossline direction by at least about 900 meters.

7. The marine seismic survey system of any of the preceding claims, further comprising:
at least one source steering device coupled to the first air gun source; and
wherein steering control signals for the source steering device are provided by equipment onboard the towing vessel to the source steering device via the wireless transceiver associated with the air gun source.

8. The marine seismic survey system of any of the preceding claims, wherein the first source umbilical cable comprises:
the air hose;
a first strength member disposed concentrically around the air hose;
a second strength member disposed concentrically around the first strength member; and
an outer protective coating.

9. The marine seismic survey system of any of claims 1 to 7, wherein the first source umbilical cable comprises:
the air hose;
a single strength member disposed concentrically around the air hose; and
an outer protective coating.

10. The marine seismic survey system of any of claims 1 to 7, wherein the first source umbilical cable comprises:
the air hose; and
an outer protective coating and a strength member that are integrally formed.

11. The marine seismic survey system of any of the preceding claims, wherein:
the electric power generation device comprises a water-driven turbine generator configured to generate electric power as the first air gun source is towed in the body of water.

12. The marine seismic survey system of any of claims 1 to 10, wherein:
the electric power generation device comprises a solar panel.

13. A method of manufacturing a geophysical data product, comprising:
towing, with a towing vessel, a first air gun source in a body of water in a manner such that the first air gun source is directly coupled to the towing vessel by one and only one cable;
wirelessly sending, with equipment onboard the towing vessel, a source activation signal to the first air gun source to produce an activation of the first air gun source;
wirelessly receiving, with the equipment onboard the towing vessel, telemetry data from the first air gun source; and
recording the telemetry data in a non-transitory computer readable medium, thereby completing the manufacture of the geophysical data product;
wherein the one and only one cable is a first source umbilical cable that comprises an air hose and at least one strength member but does not include wires or optical fibers that are configured to transmit control signals or telemetry data between the first air gun source and the towing vessel or vice versa.

14. The method of claim 13, further comprising:
towing, with the towing vessel, a second air gun source configured like the first air gun source and directly coupled to the towing vessel by a second source umbilical cable only;
wherein the second source umbilical cable is configured like the first source umbilical cable; and
wherein the first air gun source and the second air gun source are separated in a crossline direction by at least 500 meters.

15. The method of claims 13 or 14, further comprising:
providing electrical power to the first air gun source via first and second electrically conductive strength members in the first source umbilical cable.
